# EUROPEAN PATENT SPECIFICATION

(11) **EP 1 510 041 B1**
(45) Date of publication and mention of the grant of the patent: **02.01.2008**
(21) Application number: 03722985.3
(22) Date of filing: 15.05.2003
(51) Int. Cl.: H04L 12/28

(54) **REPRODUCTION OF PARTICULAR INFORMATION USING DEVICES CONNECTED TO A HOME NETWORK**
WIEDERGABE BESTIMMTER INFORMATIONEN MIT VERWENDUNG VON AN EIN HAUSNETZ VERBUNDENEN GERÄTEN
REPRODUCTION D'INFORMATIONS PARTICULIERES AU MOYEN DE DISPOSITIFS CONNECTES A UN RESEAU DOMESTIQUE

(30) Priority: 23.05.2002 GB 0211899
(43) Date of publication of application: 02.03.2005
(73) Proprietor: Koninklijke Philips Electronics N.V., 5621 BA Eindhoven (NL)
(72) Inventor: EVES, David A. c/o Philips Int. Prop. & Standards, Redhill, Surrey RH1 5HA (GB); COLE, Richard S. Philips Int. Property & Standards, Redhill, Surrey RH1 5HA (GB)
(74) Representative: Damen, Daniel Martijn
(86) International application number: PCT/IB2003/002070
(87) International publication number: WO 2003/101045

(56) References cited:
- WO-A-98/59282
- FR-A- 2 770 017
- US-A- 6 152 829

## Description

This invention relates to a method of operating a set of devices and to a real world representation system comprising a set of devices. In particular this invention relates to operating the devices to provide a real world experience.

United States Patent 6,152,829 discloses a device and process for producing effects of waterfall, rain, garden, mountains, desert, animals, kitchen and river scenes while viewing a picture, an advertisement or playing amusement games in a cinema hall/open theatre/TV. The device includes a movie film/video tape/disc with coded signals for producing effects of waterfall, rain, garden, mountain, desert, animals, kitchen and river scenes or advertisements either recorded separately or embedded on the sound signals; an electronic decoder for decoding the coded signals when the film is moving and particular scene appears; the output of the electronic decoder is connected to an actuating device that releases gas/perfumes or energizes a heating/cooling device to produce the desired effects corresponding to the scene appearing on the screen.

In any communication system or multimedia system, a predetermined event, such as the receipt of an e-mail or loading of a CD results in an indication or a change in the information conveyed to a user. For example, when a telephone receives an incoming call it produces an audible ringing. However, such an indication conveys limited information to the user and is provided by just the device concerned.

It is an object of the present invention to provide an improved method of operating a set of devices.

According to a first aspect of the invention, there is provided a method of operating a set of devices, said set for providing a real world experience in accordance with a real world description in the form of an instruction set of a markup language, comprising receiving an electronic communication, said electronic communication comprising a predetermined event, recognising the source of the electronic communication and operating said set of devices to provide a real world experience in response to the predetermined event, said real world experience being characteristic of the event and said real world experience identifying the source of said electronic communication.

According to a second aspect of the invention, there is provided a real world representation system comprising a set of devices, said set for providing a real world experience in accordance with a real world description in the form of an instruction set of a markup language, and said devices being operated to provide a real world experience in response to a predetermined event, a device of said set including receiving means for receiving an electronic communication and arranged to recognise the source of the electronic communication and wherein said event comprises the receipt of said electronic communication and said real world experience is characteristic of the event and said real world experience identifying the source of said electronic communication.

Owing to the invention the user is provided with a real world experience in response to a predetermined event. The ambient environment surrounding the user is employed to convey the experience to the user via at least one of the user's natural senses. The experience may complement the event and is characteristic of the event thereby identifying the event as a particular type and/or specific event.

The event may comprise the receipt of an electronic communication such as an e-mail, a telephone call or an S.M.S. message. The real world experience identifies the source of the electronic communication by having elements characteristic of a particular source.

The real world description may be transmitted to the system as part of the event or retrieved from a local store.

The event may comprise an operation of an electronic device such as the loading of a CD on a hi-fi.
Figure 1 is a perspective view of a real-world representation system, and
Figure 2 is a flowchart of a method of operating a set of devices.

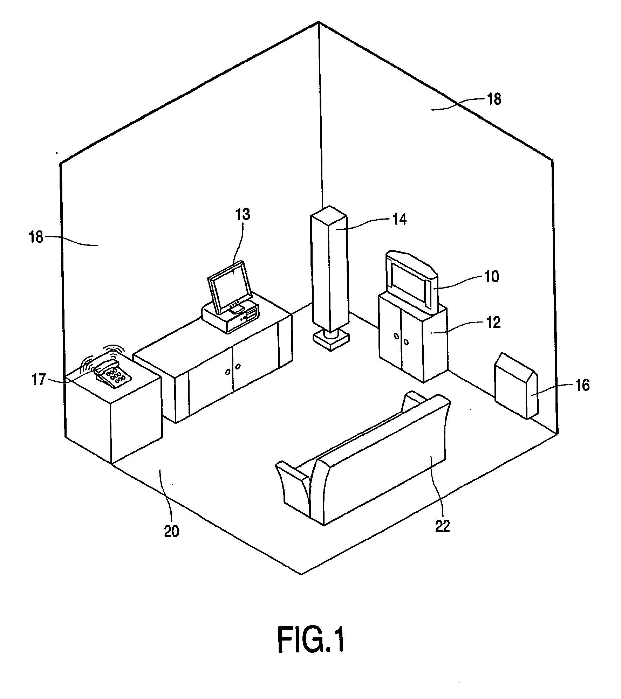

Figure 1 shows a real-world representation system comprising a set of devices including a display device 10, audio speakers 12, a personal computer (PC) 13, a lighting device 14, a heating device 16, a telephone 17, walls 18 and the floor 20. These devices together contribute to make up the ambient environment, each device being arranged to provide one or more real-world parameters. For example, the lighting device 14 contributes colour tones as well as to the luminance level. The devices may be electronic or they may be purely mechanical. The devices are interconnected by either a wireless network or a wired network such as a powerline carrier network. Each device is arranged to receive a real world description in the form of an instruction set of a markup language.

In addition to the display device 10, the walls 18 and floor 20 are provided with display functionality. This can be achieved either by the walls 18 and floor 20 being composed of fabric display material, or a centred ceiling projector can illuminate the visible portions of the walls 18 and the floor 20. It is also feasible to back light the walls 18 if the environment allows it.

The system of Figure 1 is shown as being a room with a couch 22 for a user, the room being part of a private dwelling. However the room could be, for example, part of an entertainment complex or could form part of a public space. The devices making up the real-world representation system are for providing a real world experience in accordance with a real-world description in the form of an instruction set of a markup language, the devices being operated to provide a real world experience in response to a predetermined event.

The telephone 17 shown in Figure 1 includes receiving means for receiving an electronic communication in the form of an incoming telephone call. The system can detect an incoming telephone call and operate the set of devices accordingly.

The PC 13 includes receiving means for receiving an electronic communication in the form of an e-mail. The system can detect an unopened e-mail and operate the set of devices accordingly. In addition, the PC includes a display, a processor and a data storage device.

Examples of predetermined events and the consequential operation of the system of Figure 1 will now be given.

In a first example, a caller makes a telephone call to the telephone 17 of the user's system. The telephone 17 receives this call and recognises the source of the call by identifying the caller's telephone number as one which has previously been stored thereon. The receipt of the call constitutes the aforementioned predetermined event. Each stored telephone number, corresponding to a caller known to the user, has an associated and pre-defined real world description in the form of an instruction set of a markup language. The telephone is arranged to receive the real world description from a local store such as an integral optical data storage device. Having recognised this particular caller, the telephone 17 transmits the associated description to the other devices in the system.

This description is distributed amongst the devices. Each markup language enabled device operates in principally the same manner. For example, the lighting device 14 has input means for receiving the real-world description in the form of an instruction set of a markup language, the input means including part of a distributed browser that interprets the instructions of the instruction set. The portion of the browser in the input means communicates with adjusting means that is arranged to adjust one or more parameters of the lighting device 14. In this first example, the caller is a friend of the user and is a pilot. The associated pre-defined description decided by the user reads <SKY>, <BRIGHT>, <AEROPLANE> and the part of the browser in the input means interprets this into specific instructions relating to the colour tones and luminance level for the adjusting means to adjust their levels accordingly. Therefore, the likely colour tone would be a sky blue and the light level would be high. The browser interprets instructions of a general type to generate specific parameter adjustments. The experience identifies the source of the communication.

The description is received by all of the other parts of the distributed browser in each of the other devices in the real-world representation system. Each device interprets the instructions and adjusts its parameter configuration accordingly. For example, the telephone 17 may make an audible ringing sound in addition to effects created by the other devices. The greater number of enabled devices that are present in a particular environment the more realistic the end result will be. In particular the operability of the walls 18 and floor 20 as display devices will determine how immersed in the real world representation the user feels.

There are many possible alternative set-ups for the system to provide a real world experience in response to an incoming telephone call. For example, the telephone 17 need not make an audible ringing sound when it receives a call but instead, the real world experience identifies the event as a particular type of event, an incoming telephone call in this case. This may be achieved by providing special lighting effects around the telephone 17 for example. The real world experience can equally identify the event as a specific event, for example by identifying who is calling.

In the case where the telephone 17 does not recognise the source of the call, for example where the call is from a telephone number not previously stored, the real world experience may indicate this by including a particular sound. However, it is possible for a caller to send a real world description in the form of an instruction set of a markup language via the telephone 17. This allows, for example, the caller to send a "signature" description which is characteristic of the caller, to be rendered on the system on receipt of the call instead of receiving the real world description from the local store.

Real world descriptions in the form of an instruction set of a markup language can be easily downloaded from an external source and stored on the local store for later use. Such descriptions can include tailored signatures for association with known callers for example. In this way, the user can build up a personal palette of signature descriptions.

The telephone 17 may also comprise answerphone functionality thus allowing callers to record a message and/or a real world description in the form of an instruction set. This can be achieved by a caller recording a URL on the answerphone that points to an instruction set. Then the user can render a real world experience in accordance with the description via the URL at a later time.

Alternatively, telephone calls can be received on a mobile telephone device (not shown). The mobile telephone transmits a real world description either to the system of Figure 1 or, if moved from this room, to any local enabled system that can render a real world experience. It may be necessary to adapt any existing local experiences currently being rendered in order to render the experience in accordance with a description stored and transmitted from the mobile telephone.

In a second example, a sender sends an e-mail to the user which is received by the PC 13. The receipt of the e-mail constitutes the aforementioned predetermined event. The PC 13 recognises the sender's address as a pre-defined trusted source. The e-mail includes a real world description in the form of an instruction set of a markup language. Having recognised this particular sender as a trusted source and received the real world description from the e-mail, the PC 13 transmits the description to the other devices in the system. As before, the description is distributed amongst the devices. In this second example, the sender is a friend of the user and is on a camping holiday in the forest. The real world description sent by the sender is indicative of the local ambience being experienced in the forest and reads <FOREST>, <SUMMER>, <EVENING>. The distributed browser interprets this and operates the set of devices accordingly. This allows the user to experience the same ambience as his friend from the comfort of his couch.

As an alternative set-up, the PC 13 may only transmit the description to the other devices in the system when the user opens the e-mail. This could be preceded by a subtle change in the ambience to indicate that a new e-mail has arrived. The sender's identity may also be indicated by this change in experience. The real world description need not be included as part of the e-mail but instead, as with the first example, it could be received from a local store.

As well as the PC 13 and the telephone 17, other electronic devices can be arranged to receive electronic communications such as set-top boxes and remote control devices (not shown in Figure 1).

In the case of electronic communications such as incoming telephone calls and e-mails, careful consideration should be given when designing the system to prevent misuse given that the experiences may be rendered without the prior explicit consent from the user.

In a third example, the user loads a CD onto the PC 13 which recognises this operation of an electronic device as a predetermined event. This operation has an associated real world description in the form of an instruction set of a markup language which has been previously defined by the user. The PC is arranged to receive the real world description from a local store such as an integral optical data storage device. Having recognised this particular operation, the PC 13 transmits the associated description to the other devices in the system. The associated description reads <ASTRO>, <STARS>, <PC> and the distributed browser interprets this into specific instructions to operate each of the devices. The "ASTRO" part of the description relates to a space-themed experience pre-selected by the user who may dictate that this theme is also applied to all other user operations associated with the PC. The devices are operated to provide a real world experience in response to the predetermined event. For example, the audio speakers 12 output sound having a space theme in response to the loading of the CD onto the PC 13.

In a further example of an operation of an electronic device, an alarm clock (not shown) wakes up the user by providing a real world experience instead of just an audible sound output associated with a conventional alarm clock. The alarm clock transmits a real world description to the other devices in the system. The devices render a real world experience in accordance with this description in a similar manner to the aforementioned examples.

Although the above examples describe the system as having a distributed browser for interpreting the received real world description, it is envisaged that the description can be read at a local server, which can be a dedicated device or could be contained within the capability of a device that nominally has a different purpose. In this case a browser or operating system present on the local server interprets the instructions of the real-world description and generates specific parameter adjustments for communicating to the relevant device. In this way devices currently available can be used without the requirement that they be modified or purpose built for use in the real world representation system.

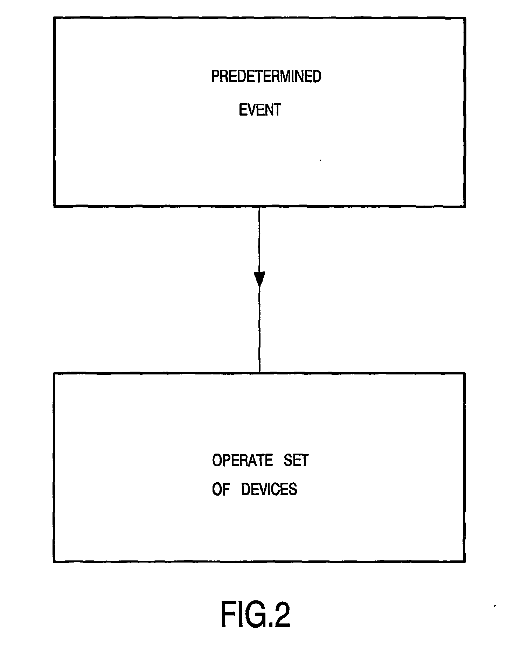

The flowchart of Figure 2 illustrates a method of operating a set of devices, the set for providing a real world experience in accordance with a real world description in the form of an instruction set of a markup language. The method comprises operating the set of devices to provide a real world experience in response to a predetermined event. Examples of a predetermined event include the receiving of an electronic communication such as an e-mail, an S.M.S. message, a pager message or an incoming telephone call, and an operation of an electronic device.

A user can operate the system in a relatively simple manner from a user interface such as a remote control, although equally an enabled PDA or other mobile terminal could be employed. The user can select an environment that they wish to be immersed in from preselected total descriptions or create a new environment from pre- or user defined variables. Such a total description may, for example, be <CHINESE RESTAURANT>, which real world experience is then rendered by the devices in the system. The real worlds generated can be fantasy environments or they can be realistic.

The user can also operate the user interface to set limits on the operation of the devices in the system. For example, if the user wishes to set the volume of those devices with an audio capability to a specific range or set an upper limit on the volume then they can do so via the user interface. This prevents experiences becoming unpleasant for the user. The level of the light and the rate of any change in light intensity are also things that the user can control. All of the parameters of the system can be user defined.

The description of the real world experiences is provided by a markup language that communicates a description of physical environments and the objects within them, their relationship to the user, each other and to the physical space. Within a location that is enabled to produce a real world experience, the instruction set of the markup language is interpreted by a device or devices to render the experience. Each device that is enabled contains a component that interprets the instruction set to the best of its capability.

The language contains a wide range of states that can be rendered by the devices in a real world representation system. Such states relate to:-
- Image display - specific images, streamed video
- Audio - music, sound effects, voice
- Mood - emotional, ambient, animated
- Light - levels (relative/absolute), moods, colours, position, focus
- User display and input - feedback, menu display
- Time - time of day, season
- Location - absolute, fantasy, generic type.

Any information that relates to a physical experience can be expressed in this markup language as long as the browser or local server is arranged to interpret the description. To create instruction sets in the markup language an author can write directly into the language or a computer program for authoring an instruction set can be used. The authoring program can take data input in the form of, for example, text or video and can generate a set of instructions comprising a subset of the markup language that when passed to a real-world representation system will allow the devices in that system to render the experience that corresponds to that of the text or video.

The language is XML compliant, XML being a meta-language that describes the standard structure for new markup languages.

## Claims

1. A method of operating a set of devices (10, 12, 13, 14, 16, 17, 18, 20), said set for providing a real world experience in accordance with a real world description in the form of an instruction set of a markup language, comprising receiving an electronic communication, said electronic communication comprising a predetermined event,
recognising the source of the electronic communication and operating said set of devices (10, 12, 13, 14, 16, 17, 18, 20) to provide a real world experience in response to the predetermined event, said real world experience being characteristic of the event and said real world experience identifying the source of said electronic communication.

2. A method according to claim 1, wherein said real world experience identifies said event as a particular type of event.

3. A method according to claim 1 or claim 2, wherein said real world experience identifies said event as a specific event.

4. A method according to any preceding claim, wherein said electronic communication comprises an e-mail.

5. A method according to any preceding claim, wherein said electronic communication comprises an incoming telephone call.

6. A method according to any preceding claim, wherein said electronic communication includes said real world description.

7. A method according to any one of claims 1 to 5, wherein said real world description is retrieved from a local store.

8. A real world representation system comprising a set of devices (10, 12, 13, 14, 16, 17, 18, 20), said set for providing a real world experience in accordance with a real world description in the form of an instruction set of a markup language, and said devices (10, 12, 13, 14, 16, 17, 18, 20) being operated to provide a real world experience in response to a predetermined event, a device of said set including receiving means for receiving an electronic communication and arranged to recognise the source of the electronic communication and wherein said event comprises the receipt of said electronic communication and said real world experience is characteristic of the event and said real world experience identifying the source of said electronic communication.

9. A system according to claim 8, wherein said device including said receiving means comprises a telephone (17).

10. A system according to claim 8 or 9, wherein said device including said receiving means comprises a personal computer (13).

11. A system according to any one of claims 8 to 10, wherein a device of said set is arranged to receive said real world description from a local store.

## Patentansprüche

1. Verfahren zum Betreiben einer Gruppe von Geräten (10, 12, 13, 14, 16, 17, 18, 20), wobei die Gruppe ein Realwelterlebnis gemäß einer Realweltbeschreibung in Form eines Befehlssatzes einer Auszeichnungssprache vorsieht, wonach eine elektronische Übermittlung empfangen wird, wobei die elektronische Übermittlung ein vorgegebenes Ereignis enthält, die Quelle der elektronischen Übermittlung erkannt und die Gruppe von Geräten (10, 12, 13, 14, 16, 17, 18, 20) betrieben wird, um ein Realwelterlebnis in Reaktion auf das vorgegebene Ereignis vorzusehen, wobei das Realwelterlebnis für das Ereignis charakteristisch ist und die Quelle der elektronischen Übermittlung identifiziert.

2. Verfahren nach Anspruch 1, wobei das Realwelterlebnis das Ereignis als eine bestimmte Ereignisart identifiziert.

3. Verfahren nach Anspruch 1 oder 2, wobei das Realwelterlebnis das Ereignis als ein bestimmtes Ereignis identifiziert.

4. Verfahren nach einem der vorangegangenen Ansprüche, wobei die elektronische Übermittlung durch eine E-Mail dargestellt ist.

5. Verfahren nach einem der vorangegangenen Ansprüche, wobei die elektronische Übermittlung durch einen eingehenden Telefonanruf dargestellt ist.

6. Verfahren nach einem der vorangegangenen Ansprüche, wobei die elektronische Übermittlung die Realweltbeschreibung enthält.

7. Verfahren nach einem der Ansprüche 1 bis 5, wobei die Realweltbeschreibung von einem Lokalspeicher abgerufen wird.

8. Realweltdarstellungssystem mit einer Gruppe von Geräten (10, 12, 13, 14, 16, 17, 18, 20), wobei die Gruppe von Geräten ein Realwelterlebnis gemäß einer Realweltbeschreibung in Form eines Befehlssatzes einer Auszeichnungssprache vorsieht und die Geräte (10, 12, 13, 14, 16, 17, 18, 20) so betrieben werden, dass ein Realwelterlebnis in Reaktion auf ein vorgegebenes Ereignis vorgesehen wird, wobei ein Gerät der Gruppe Empfangsmittel zum Empfang einer elektronischen Übermittlung aufweist und so vorgesehen ist, dass es die Quelle der elektronischen Übermittlung identifiziert, wobei das Ereignis den Empfang der elektronischen Übermittlung umfasst und das Realwelterlebnis für das Ereignis charakteristisch ist, und wobei das Realwelterlebnis die Quelle der elektronischen Übermittlung erkennt.

9. System nach Anspruch 8, wobei das die Empfangsmittel enthaltende Gerät ein Telefongerät (17) umfasst.

10. System nach Anspruch 8 oder 9, wobei das die Empfangsmittel enthaltende Gerät einen Personalcomputer (13) umfasst.

11. System nach einem der Ansprüche 8 bis 10, wobei ein Gerät der Gruppe so vorgesehen ist, dass es die Realweltbeschreibung von einem Lokalspeicher empfängt.

## Revendications

1. Procédé d'utilisation d'un ensemble de dispositifs (10, 12, 13, 14, 16, 17, 18, 20), ledit ensemble étant conçu pour procurer une expérience de monde réel selon une description de monde réel sous la forme d'un jeu d'instructions d'un langage de balisage, comprenant la réception d'une communication électronique, ladite communication électronique comprenant un événement prédéterminé, la reconnaissance de la source de la communication électronique, et l'utilisation dudit ensemble de dispositifs (10, 12, 13, 14, 16, 17, 18, 20) pour procurer une expérience de monde réel en réponse à l'événement prédéterminé, ladite expérience de monde réel étant caractéristique de l'événement et ladite expérience de monde réel identifiant la source de ladite communication électronique.

2. Procédé selon la revendication 1, dans lequel ladite expérience de monde réel identifie ledit événement comme un type d'événement particulier.

3. Procédé selon la revendication 1 ou la revendication 2, dans lequel ladite expérience de monde réel identifie ledit événement comme un événement spécifique.

4. Procédé selon l'une quelconque des revendications précédentes, dans lequel ladite communication électronique comprend un courriel.

5. Procédé selon l'une quelconque des revendications précédentes, dans lequel ladite communication électronique comprend un appel téléphonique entrant.

6. Procédé selon l'une quelconque des revendications précédentes, dans lequel ladite communication électronique inclut ladite description de monde réel.

7. Procédé selon l'une quelconque des revendications 1 à 5, dans lequel ladite description de monde réel est extraite d'un stockage local.

8. Système de représentation de monde réel comprenant un ensemble de dispositifs (10, 12, 13, 14, 16, 17, 18, 20), ledit ensemble étant conçu pour procurer une expérience de monde réel selon une description de monde réel sous la forme d'un jeu d'instructions d'un langage de balisage, et lesdits dispositifs (10, 12, 13, 14, 16, 17, 18, 20) étant utilisés pour procurer une expérience de monde réel en réponse à un événement prédéterminé, un dispositif dudit ensemble incluant un moyen de réception pour recevoir une communication électronique et étant aménagés pour reconnaître la source de la communication électronique, et dans lequel ledit événement comprend la réception de ladite communication électronique, ladite expérience de monde réel étant caractéristique de l'événement et ladite expérience de monde réel identifiant la source de ladite communication électronique.

9. Système selon la revendication 8, dans lequel ledit dispositif incluant ledit moyen de réception comprend un téléphone (17).

10. Système selon la revendication 8 ou 9, dans lequel ledit dispositif incluant ledit moyen de réception comprend un ordinateur personnel (13).

11. Système selon l'une quelconque des revendications 8 à 10, dans lequel un dispositif dudit jeu est aménagé pour recevoir ladite description de monde réel à partir d'un stockage local.
